# DEMANDE DE BREVET EUROPEEN

(11) **EP 1 916 623 A1**
(43) Date de publication de la demande: **30.04.2008**
(21) Numéro de dépôt: 07119339.5
(22) Date de dépôt: 25.10.2007
(51) Int. Cl.: G06Q 40/00, G06Q 20/00

(54) **Procédé de fourniture de données de transactions, terminal, procédé de transaction, procédé d'enrichissement de relevés bancaires, serveur, signaux et produits programme d'ordinateur correspondants.**

(30) Priorité: 25.10.2006 FR 0609391
(71) Demandeur: Compagnie Industrielle et Financiere d'Ingenierie (Ingenico) Sociéte Anonyme, 92200 Neuilly sur Seine (FR)
(72) Inventeur: Naccache, David, 75018, PARIS (FR)
(74) Mandataire: Bioret, Ludovic

(57) **Abrégé**

L'invention concerne un procédé de fourniture de données représentatives de transactions entre un client et au moins un commerçant, par l'intermédiaire d'un organisme bancaire, ledit organisme bancaire délivrant audit client un relevé comprenant, pour chaque transaction, une ligne de relevé, comprenant au moins une référence de ladite transaction et/ou dudit commerçant et un montant correspondant.
Selon l'invention, un tel procédé comprend :
- une phase de transaction comprenant les étapes suivantes :
- une étape d'enregistrement des données représentatives de ladite transaction, dans un serveur de relevés;
- une étape d'obtention et de stockage dans un serveur de données d'illustrations d'au moins une information représentative d'une photographie et/ou illustration représentative dudit commerçant, dite information illustrative ;

- une phase de fourniture dudit relevé comprenant les étapes suivantes :
- une étape de construction dudit relevé, associant à au moins une desdites lignes de relevé d'une part lesdites données représentatives de la transaction, et d'autre part au moins une desdites informations illustratives et/ou d'au moins une information désignant via un hyperlien au moins une desdites informations illustratives, dite information d'accès ;
- une étape de transmission dudit relevé.

## Description

### 1. Domaine de l'invention

Le domaine de l'invention est celui des transactions entre clients et commerçants. Plus particulièrement, l'invention s'applique aux relevés représentatifs de telles transactions, fournis par les organismes bancaires gérant les transactions et accessibles par le client sur un terminal.

Plus précisément encore, l'invention concerne l'amélioration des données figurant sur ces relevés, qui comprennent notamment des informations transmises par les commerçants via leurs terminaux de paiement, au moment de la transaction.

### 2. Art antérieur

Les organismes bancaires peuvent délivrer à leurs clients différents relevés, et notamment des relevés en version informatique ou des relevés en version papier

Il existe différents formats de présentation de relevés informatiques, notamment en fonction de l'organisme bancaire émetteur.

De façon générale, un relevé informatique bancaire présente un certain nombre d'informations relatives aux transactions effectuées par le client, présentées communément sous la forme de lignes, représentatives chacune d'une transaction particulière.

Ces informations présentent par exemple la date de la transaction, son montant, et une référence du commerçant avec lequel la transaction a été effectuée.

Un inconvénient de ces relevés informatiques tient au fait qu'ils ne présentent pas d'informations détaillées sur le commerçant.

En effet, la référence, ou identification, du commerçant se révèle le plus souvent incomplète et inutile pour le client qui souhaite avoir des détails sur la transaction en question, surtout quand celui-ci consulte son relevé un certain temps après la transaction, ou lorsque la transaction a eu lieu dans un pays utilisant un jeu de caractères différent de celui du client (par exemple un client français en chine). Cette référence correspond à l'identification du commerçant que celui-ci enregistre au moment où il met en service son terminal de paiement et peut correspondre par exemple au nom du commerçant, à sa raison sociale, au mieux au nom de son commerce.

Ces relevés présentent également l'inconvénient de ne fournir aucune information sur la transaction en elle-même, c'est-à-dire les biens ou les services objets de cette transaction.

Les mêmes difficultés sont rencontrées pour les relevés papier.

### 3. Objectifs de l'invention

L'invention a notamment pour objectif de pallier ces inconvénients de l'art antérieur.

Plus précisément, un objectif de l'invention est d'offrir une meilleure ergonomie pour la lecture des relevés bancaires.

L'invention a notamment pour objectif de permettre une facilité de gestion aux clients visualisant leurs relevés bancaires, en leur donnant accès à des informations plus précises.

L'invention a encore pour objectif de fournir une meilleure lisibilité des relevés bancaires, en les rendant plus détaillés et plus conviviaux, à moindre coût et de mise en oeuvre simple.

### 4. Exposé de l'invention

L'invention propose une solution nouvelle qui ne présente pas l'ensemble de ces inconvénients de l'art antérieur, sous la forme d'un procédé de fourniture de données représentatives de transactions entre un client et au moins un commerçant, par l'intermédiaire d'un organisme bancaire,
ledit organisme bancaire délivrant audit client un relevé comprenant, pour chaque transaction, une ligne de relevé, comprenant au moins une référence de ladite transaction et/ou dudit commerçant et un montant correspondant.
Selon l'invention, un tel procédé comprend :
- une phase de transaction comprenant les étapes suivantes :
   - une étape d'enregistrement des données représentatives de ladite transaction, dans un serveur de relevés ;
   - une étape d'obtention et de stockage dans un serveur de données d'illustrations d'au moins une information représentative d'une photographie et/ou illustration représentative dudit commerçant, dite information illustrative ;
- une phase de fourniture dudit relevé comprenant les étapes suivantes :
   - une étape de construction dudit relevé, associant à au moins une desdites lignes de relevé d'une part lesdites données représentatives de la transaction, et d'autre part au moins une desdites informations illustratives et/ou d'au moins une information désignant via un hyperlien au moins une desdites informations illustratives, dite information d'accès ;
   - une étape de transmission dudit relevé.

Selon un premier mode de mise en oeuvre de l'invention, le relevé ainsi obtenu peut être délivré, ou fourni, sous une forme papier, et transmis au client par exemple par la poste, après son impression par l'organisme bancaire.

Dans un second mode de mise en oeuvre, ledit relevé peut être un relevé informatique visualisable sur un terminal client.

Ainsi, le procédé selon l'invention permet au client visualisant un relevé bancaire, en version papier ou en version informatique, sur son terminal, d'accéder à des informations détaillant plus particulièrement la transaction ou le commerçant, de façon simple et ergonomique.

Selon un premier mode de réalisation avantageux, l'information illustrative peut comprendre au moins une photographie et/ou illustration, représentative de ladite transaction et/ou dudit commerçant.

Selon un deuxième mode de réalisation avantageux, qui peut le cas échéant être combiné avec le premier, l'information illustrative peut comprendre au moins un hyperlien renvoyant vers au moins un serveur de données contenant des photographies et/ou illustrations, représentatives de ladite transaction et/ou dudit commerçant.

Dans ce cas, avantageusement, au moins un desdits hyperliens pointe sur au moins une photographie et/ou illustration représentative dudit commerçant.

Ainsi, le client peut obtenir une information visuelle du commerçant chez lequel il a effectué sa transaction, facilitant ainsi la vérification des transactions du relevé et permettant plus facilement la détection d'éventuelles erreurs de transactions. En effet, la visualisation du commerce par exemple peut permettre au client de se souvenir d'avoir effectivement bien effectué une transaction dans ledit commerce.

Selon un autre aspect avantageux de l'invention, au moins un desdits hyperliens pointe sur au moins une photographie et/ou illustration représentative d'au moins un bien ou service objet de ladite transaction.

Ainsi, le client peut également accéder, en cliquant sur un lien sur son relevé bancaire informatique, à une illustration/photographie correspondant plus spécifiquement à la transaction concernée, c'est-à-dire au bien ou au service objet de la transaction. Ainsi, le client peut visualiser par exemple le bien acheté lors de la transaction (par exemple un bouquet de fleurs), une suite de photographies représentant la totalité de ses achats faisant partie de la transaction, ou encore une illustration représentant un service acheté (par exemple une photographie caractéristique d'un pays pour lequel le client a acheté un séjour chez un voyagiste).

Selon une mise en oeuvre préférentielle, le procédé selon l'invention comprend les étapes suivantes :
- stockage d'une photographie et/ou illustration représentative dudit commerçant ;
- création d'un message de transaction, comprenant des données représentatives d'une transaction et des données correspondant à ladite photographie et/ou illustration ;
- transmission dudit message de transaction audit organisme bancaire ;
- insertion par ledit organisme bancaire, dans la ligne de relevé correspondante, de ladite photographie et/ou illustration ou d'un hyperlien pointant sur ladite photographie et/ou illustration.

Ces différentes étapes, mises en oeuvre par le terminal de transaction ou le serveur de l'organisme bancaire, permettent de fournir au client un relevé bancaire informatique enrichi, contenant des photographies ou des illustrations représentant le commerçant ou son commerce ou des liens vers des photographies ou des illustrations représentant le commerçant ou son commerce.

Selon une autre mise en oeuvre préférentielle, compatible avec la précédente, le procédé selon l'invention comprend les étapes suivantes :
- obtention d'au moins une photographie et/ou illustration représentative d'au moins un bien ou service;
- création d'un message de transaction, comprenant des données représentatives d'une transaction et des données correspondant à la ou auxdites photographies et/ou illustrations;
- transmission dudit message de transaction audit organisme bancaire ;
- insertion par ledit organisme bancaire, dans la ligne de relevé correspondante, de la ou lesdites photographies et/ou illustrations ou d'au moins un hyperlien pointant sur la ou lesdites photographies et/ou illustrations.

Selon une première variante, au moins une desdites photographies et/ou illustrations est stockée dans le terminal de transaction dudit commerçant, et incluse dans ledit message de transaction.

Ainsi, le commerçant, au moment de la mise en service de son terminal de transactions, va enregistrer une photographie /illustration de son choix permettant de l'identifier. Cette photographie/illustration peut représenter le commerçant lui-même, la devanture de son commerce, l'intérieur de son commerce, son enseigne, un logo, un lien html vers le site Internet du commerce etc.

Le commerçant peut ensuite mettre à jour la photographie ou l'illustration dans la mémoire du terminal de transaction.

Selon une deuxième variante, au moins une desdites photographies et/ou illustrations est transmise par ledit terminal de transaction audit organisme bancaire lors d'une étape d'initialisation et stockée dans ledit serveur de données.

Dans une autre variante de réalisation, le terminal de transaction peut transmettre au serveur de relevés de l'organisme bancaire une référence sur un bien au lieu d'insérer une photographie/illustration sur ce bien, de façon que le serveur de relevés insère un hyperlien vers la référence dans le catalogue Internet du commerçant, au lieu d'un hyperlien vers une photographie/illustration.

Par exemple, la photographie et/ou illustration permettant d'identifier le commerçant peut être envoyée à l'organisme bancaire au moment de l'initialisation du terminal de transaction, et ensuite être stockée par le serveur de données. Ainsi, le terminal de transaction n'a pas besoin de renvoyer cette information représentative du commerçant à chaque transaction, c'est l'organisme bancaire qui fournit l'information.

Selon encore un autre mode de réalisation de l'invention, bien sûr compatible avec les précédents, l'information illustrative comprend un hyperlien dirigeant vers un site Internet dudit commerçant.

Ainsi, le lien vers le commerçant peut pointer vers la page d'accueil du site Internet du commerçant, et les liens vers les biens ou services objets de la transaction peuvent par exemple pointer vers les pages correspondantes dans un catalogue disponible sur le site Internet du commerçant.

Selon un mode de réalisation particulier, le procédé comprend une étape d'obtention d'au moins une photographie à l'aide d'un appareil de prise de vues, connecté à ou intégré dans un terminal de transaction.

Ainsi, un appareil photographique peut par exemple être connecté au terminal de transaction, pour lui transférer les photographies prises des biens achetés. Ces photographies peuvent ensuite être stockées, de façon temporaire, dans le terminal, avant d'être insérées dans le message de transaction émis par le terminal à destination de l'organisme bancaire.

Dans le cas de service objet de la transaction, un appareil photographique numérique peut être utilisé, dans lequel sont stockés en mémoire des illustrations de services disponibles chez le commerçant, et qui va ensuite transférer vers le terminal de transaction l'illustration correspondant à la transaction.

Selon une variante, un appareil photographique peut être intégré au terminal de transaction, afin de faciliter la mise en oeuvre du procédé.

Selon encore une autre variante, la ou lesdites informations illustratives sont stockées dans un terminal de transaction dudit commerçant et transmises par ledit terminal de transaction audit organisme bancaire en différé par rapport à un message de transaction correspondant, ledit message de transaction comprenant au moins une référence à la ou auxdites informations illustratives.

Ainsi, la transmission de photographies et/illustrations se faisant en différé (par exemple, la nuit suivant la transaction), la transaction n'est pas ralentie. En effet, la transmission de contenus tels que des images demande du temps et peut nuire à la fluidité des transactions chez un commerçant. Afin de pouvoir transmettre de tels contenus en différé de la transaction, le procédé selon l'invention inclut dans le message de transaction au moins une référence à la photographie ou à l'illustration qui sera transmise plus tard, de façon à ce que l'organisme bancaire puisse faire le lien entre la transaction et l'information illustrative correspondante.

De plus, le terminal peut également transmettre de façon globale (par "lot"), dans une même session de transmission, les informations illustratives stockées au cours d'une journée par exemple, au lieu de les envoyer une par une à l'organisme bancaire.

Selon un autre aspect, l'invention concerne un terminal de transaction permettant de réaliser une transaction entre un client et un commerçant, et communiquant avec un organisme bancaire.

Selon l'invention, un tel terminal de transaction comprend :
- des moyens d'obtention d'au moins une information représentative d'une photographie et/ou d'illustration représentative dudit commerçant ;
- des moyens d'insertion de la ou desdites informations dans un message de transaction ;
- des moyens de transmission dudit message de transaction audit organisme bancaire.

Ainsi, le terminal de transaction peut associer à une transaction une information représentative d'une photographie et/ou d'une illustration représentative de la transaction, par exemple une photographie du bien acheté, et/ou représentative du commerçant, par exemple une photographie de la devanture de son magasin. Le terminal peut ensuite insérer ces informations dans un message de transaction, avec les autres informations classiques telles que le montant de la transaction, sa référence ..., à destination de l'organisme bancaire.

Plus particulièrement, le terminal de transaction comprend des moyens d'insertion dans ledit message de transaction de la ou lesdites photographies et/ou illustrations, ou d'au moins une référence à la ou lesdites photographies et/ou illustrations.

Ainsi, le terminal peut insérer directement dans le message une photographie et/ou une illustration.

Selon un autre aspect, le terminal comprend des moyens de prise de vues et/ou de mise en oeuvre d'une connexion avec un appareil de prise de vues délivrant au moins une photographie d'au moins un bien ou service objet de ladite transaction.

Par exemple, le terminal est connecté à un appareil de prise de vues, par une liaison filaire ou non, par exemple un appareil photographique. Cet appareil de prise de vues peut prendre des photographies des biens achetés et les transmettre au terminal quand celui-ci en fait la requête, au moment par exemple de la création du message de transaction.

L'appareil de prise de vues peut également mémoriser ces photographies et les tenir à disposition du terminal de transaction.

Selon une variante, le terminal peut lui-même comprendre un appareil de prise de vues, permettant de photographier les biens achetés. De cette manière, le terminal dispose directement des photographies.

Dans le cas où le terminal ne transmet pas les photographies et/ou illustrations dans le message de transaction, il comprend également des moyens de transmission audit organisme bancaire d'au moins une photographie et/ou illustration représentative dudit commerçant en différé par rapport audit message de transaction.

Ainsi, le terminal insère dans le message de transaction des références aux photographies et/ou aux illustrations qu'il transmettra ultérieurement à l'organisme bancaire.

Selon encore un autre aspect, l'invention concerne un procédé de transaction mis en oeuvre dans un terminal de transaction, ledit terminal permettant de réaliser une transaction entre un client et un commerçant, et communiquant avec un organisme bancaire.

Selon l'invention, un tel procédé comprend les étapes suivantes :
- obtention d'au moins une information représentative d'une photographie et/ou d'illustration représentative dudit commerçant ;
- insertion de la ou desdites informations dans un message de transaction ;
- transmission dudit message de transaction audit organisme bancaire.

Encore un autre aspect de l'invention concerne un produit programme d'ordinateur téléchargeable depuis un réseau de communication et/ou stocké sur un support lisible par ordinateur et/ou exécutable par un microprocesseur, comprenant des instructions de code de programme pour l'exécution du procédé de transaction décrit précédemment, lorsqu'il est exécuté sur un ordinateur.

L'invention concerne également un signal de données émis par un terminal de transaction entre un client et un commerçant, à destination d'un organisme bancaire.

Selon l'invention, un tel signal comprend au moins un champ de données comprenant au moins une information représentative d'au moins une photographie et/ou au moins une illustration dudit commerçant.

Ainsi, le signal de données émis par le terminal à destination de l'organisme bancaire comprend, en plus des champs de données classiques tels que le champ de référence de la transaction ou le champ de montant de la transaction, un champ de données permettant de transmettre à l'organisme bancaire les informations illustratives relatives à la transaction et/ou au commerçant.

Plus particulièrement, ces informations peuvent appartenir au groupe comprenant au moins :
- au moins une photographie et/ou illustration représentative dudit commerçant ;
- au moins un hyperlien pointant vers une base de données contenant des photographies et/ou des illustrations dudit commerçant;
- au moins un hyperlien pointant vers un site Internet dudit commerçant.

Un autre aspect de l'invention concerne un serveur de relevés bancaires représentatifs d'au moins une transaction entre un client et au moins un commerçant, lesdits relevés comprenant, pour chaque transaction, une ligne de relevé, comprenant au moins une référence de ladite transaction et/ou dudit commerçant et un montant correspondant.
Selon l'invention, un tel serveur comprend :
- des moyens d'enregistrement des données représentatives de ladite transaction;
- des moyens de construction dudit relevé, associant à au moins une desdites lignes de relevé d'une part lesdites données représentatives de la transaction, et d'autre part au moins un des éléments appartenant au groupe comprenant :
   o au moins une photographie et/ou illustration dudit commerçant ;
   o au moins un hyperlien pointant sur au moins une photographie et/ou illustration dudit commerçant ;
   o au moins un hyperlien pointant sur un site Internet dudit commerçant.
- des moyens de transmission dudit relevé.

Ainsi, le serveur se sert des informations reçues du terminal de transaction pour insérer dans les relevés bancaires un ou des hyperliens pointant sur une ou des photographies et/ou illustrations représentatives de la transaction ou du commerçant, de façon à ce que le client puisse, en cliquant sur ces hyperliens, visualiser la/les photographies relatives au commerçant ou au bien/service acheté lors de la transaction.

Le serveur peut également insérer une ou des photographies et/ou illustrations représentatives de la transaction ou du commerçant, reçues par le terminal ou stockées dans un serveur de données, qui sont alors directement visibles par le client lorsqu'il affiche son relevé bancaire.

Selon une variante, un tel serveur comprend des moyens d'association d'une transaction à au moins une photographie dudit commerçant et/ou d'au moins un bien ou service objet de ladite transaction transmise en différé par un terminal mobile, en fonction d'au moins un paramètre appartenant au groupe comprenant :
- des paramètres d'horodatage de ladite transaction et de ladite photographie dudit commerçant;
- des paramètres de localisation de ladite transaction et de la station de base utilisée par ledit terminal mobile pour ladite transmission de ladite photographie dudit commerçant ;
- des paramètres d'identification de ladite transaction et dudit terminal mobile.

Dans ce cas, les photographies peuvent être prises par un client utilisant par exemple un téléphone mobile. Le client peut envoyer les photographies prises par MMS (« Multimedia Messaging Service ») par exemple à l'organisme bancaire, ou le téléphone mobile dont il se sert peut avoir une fonctionnalité particulière permettant de transférer automatiquement des photographies à un organisme bancaire, grâce à un numéro prédéterminé.

Dans le cas de transfert des photographies "en dehors" de la transaction, c'est-à-dire par un terminal autre que le terminal de transaction, l'organisme bancaire doit pouvoir relier les photographies reçues aux messages de transaction émis par un terminal de transaction. Pour ce faire, l'organisme bancaire peut extraire des paramètres dans les messages de transaction qu'il peut comparer avec des caractéristiques de la transmission des photographies.

Par exemple, l'heure de la prise de la photographie peut être comparée avec l'horodatage du message de transaction.

L'organisme bancaire peut aussi comparer le lieu de la transaction apparaissant dans le message de transaction, avec une information de localisation de la station de base ayant servie au téléphone mobile pour envoyer les photographies.

Un identifiant de la transaction, par exemple le numéro de la carte de crédit utilisé par le client, et un identifiant du téléphone mobile utilisé peuvent également être comparés par l'organisme bancaire pour associer les photographies à la transaction correspondante.

Le numéro utilisé par le téléphone pour transmettre les photographies peut aussi permettre d'identifier le client et la transaction correspondante.

Un autre aspect de l'invention concerne un procédé d'enrichissement de relevés bancaires informatiques mis en oeuvre dans un serveur, lesdits relevés bancaires étant représentatifs d'au moins une transaction entre un client et au moins un commerçant et comprenant, pour chaque transaction, une ligne de relevé, comprenant au moins une référence de ladite transaction et/ou dudit commerçant et un montant correspondant.

Selon l'invention, un tel procédé comprend :
- une étape d'enregistrement des données représentatives de ladite transaction ;
- une étape de construction dudit relevé, associant à au moins une desdites lignes de relevé d'une part lesdites données représentatives de la transaction, et d'autre part au moins un des éléments appartenant au groupe comprenant :
   o au moins une photographie et/ou illustration dudit commerçant ;
   o au moins un hyperlien pointant sur au moins une photographie et/ou illustration dudit commerçant;
   o au moins un hyperlien pointant sur un site Internet dudit commerçant ;
- une étape de transmission dudit relevé.

L'invention concerne également un produit programme d'ordinateur téléchargeable depuis un réseau de communication et/ou stocké sur un support lisible par ordinateur et/ou exécutable par un microprocesseur, comprenant des instructions de code de programme pour l'exécution du procédé d'enrichissement de relevés bancaires décrit ci-dessus, lorsqu'il est exécuté sur un ordinateur.

Un autre aspect de l'invention concerne un signal représentatif d'un relevé émis par un serveur de relevés bancaires, comprenant au moins les champs suivants, pour chaque ligne de relevé :
- un champ de référence de transaction ;
- un champ de montant de transaction.

Selon l'invention, un tel signal comprend un champ d'enrichissement comprenant au moins un des éléments appartenant au groupe comprenant :
- au moins une photographie et/ou illustration dudit commerçant ;
- au moins un hyperlien pointant sur au moins une photographie et/ou illustration dudit commerçant ;
- au moins un hyperlien pointant sur un site Internet dudit commerçant.

Ainsi, le signal émis par le serveur de relevés bancaires à destination d'un terminal client, comprend un champ permettant d'ajouter au relevé bancaire classique un hyperlien pointant sur une ou plusieurs photographies et/ou illustrations représentatives du commerçant et/ou de l'objet de la transaction ou directement une ou plusieurs photographies et/ou illustrations représentatives du commerçant et/ou de l'objet de la transaction.

### 5. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :
- la figure 1 présente un synoptique d'un système d'accès à des données représentatives de transactions dans lequel est mis en oeuvre un mode de réalisation de l'invention ;
- la figure 2 illustre un exemple d'une partie de la figure 1 correspondant au terminal de transaction selon un mode de réalisation particulier de l'invention ;
- la figure 3 présente un exemple de la structure d'un signal émis par le terminal de transaction selon un mode de réalisation particulier de l'invention ;
- la figure 4 illustre un exemple d'une partie de la figure 1 correspondant au serveur de relevés bancaires selon un mode de réalisation particulier de l'invention ;
- la figure 5 illustre un exemple d'une partie de la figure 1 correspondant au terminal client selon un mode de réalisation particulier de l'invention ;
- les figures 6A et 6B illustrent un exemple de relevé bancaire sur un terminal client selon un mode de réalisation particulier de l'invention.

### 6. Description d'un mode de réalisation de l'invention

Le principe général de l'invention repose sur la mise en oeuvre d'un procédé de transmission d'informations illustratives représentatives d'une transaction entre un client et un commerçant et/ou d'un commerçant chez lequel une transaction est effectuée.

Plus précisément, selon un mode de réalisation particulier de l'invention, un tel procédé permet de fournir au client des informations représentatives de la transaction et/ou du commerçant, par l'intermédiaire d'un serveur de relevés bancaires d'un organisme bancaire qui gère ses transactions.

En particulier, un tel procédé permet la transmission d'informations illustratives, telles que des photographies ou des illustrations, relatives au commerçant et/ou aux biens ou aux services objets de la transaction.

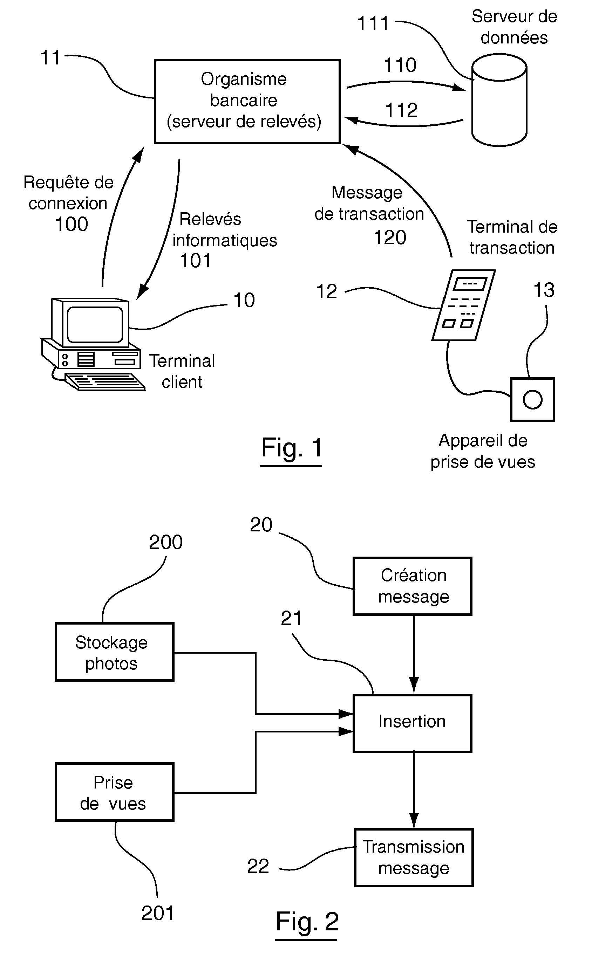

On présente maintenant en relation avec la figure 1 un système mettant en oeuvre un tel procédé selon un mode de réalisation particulier de l'invention.

On considère dans cet exemple une transaction entre un client et un commerçant, gérée par l'intermédiaire d'un terminal de transaction 12.

Ce terminal de transaction 12 est connecté à un appareil de prise de vues 13, lui permettant d'obtenir des photographies de la transaction, qui sont ensuite mémorisées, par exemple pour obtenir des photographies des biens ou des services objets de la transaction.

Selon une variante de ce mode de réalisation, le terminal 12 peut lui-même prendre des photographies de la transaction, pour éviter une connexion avec un appareil photographique externe, et ainsi faciliter la mise en oeuvre du procédé selon l'invention.

Le terminal de transaction peut également stocker des illustrations et/ou des photographies représentatives du commerçant ou du commerce dans lequel il est utilisé.

Ainsi, le terminal 12 gère en mémoire des informations illustratives représentatives du commerçant ou du commerce et/ou représentatives des objets de la transaction, biens ou services.

Selon une variante de ce mode de réalisation, ces informations illustratives peuvent également être mémorisées dans une base de données externe.

Le terminal crée ensuite un message de transaction 120, destiné à être envoyé à l'organisme bancaire, dans lequel il insère, en plus des informations classiques de transaction, la ou les informations illustratives relatives à la transaction ou au commerçant qu'il a en mémoire.

L'organisme bancaire, et plus particulièrement le serveur de relevés bancaires associé 11 reçoit alors le message de transaction 120 et stocke, via un accès 110, dans une base de données sur un serveur de données 111, la ou les informations illustratives insérées dans le message de transaction par le terminal de transaction 12.

Selon une variante, non illustrée dans la figure 1, le terminal peut transmettre les informations illustratives dans un ou plusieurs messages distincts du message de transaction, de manière différée temporellement par rapport à ce dernier.

En effet, la transmission de messages incluant des images peut prendre du temps, notamment du fait de leur taille, et donc risquer d'encombrer les transmissions d'informations effectuées pour les transactions entre un terminal et un organisme bancaire.

Ainsi, en différant la transmission de tels messages, le procédé selon cette variante évite de ralentir le flux de clients chez le commerçant. Pour ce faire, le terminal insère dans le message de transaction une référence à l'image associée à la transaction, image qu'il transmettra ultérieurement, avec cette même référence.

Cette variante permet également l'envoi par "lot" des photographies ou illustrations correspondant aux transactions effectuées dans une journée par exemple. Ce transfert peut être effectué de nuit.

Dans le cas de transfert différé, l'organisme bancaire, quand il reçoit le message de transaction, enregistre la référence, et s'en sert lors de la réception du message différé contenant l'information illustrative, pour reconnaître cette information et l'associer à la transaction correspondante.

Le serveur de relevés bancaires 11 crée ensuite un relevé dans lequel il associe à une ligne correspondant à une transaction au moins un hyperlien 112 vers la/les données d'information illustratives correspondantes.

Dans le mode de réalisation décrit ci-après, le relevé est un relevé informatique, que le client peut visualiser sur un terminal classique (ordinateur, radio-téléphone, PDA,...). Quand le client se connecte via une requête de connexion 100 par l'intermédiaire de son terminal 10 à l'organisme bancaire gérant ses transactions, il obtient lors d'une étape 101 un ou des relevés informatiques sur lesquels apparaissent les données représentatives de ses transactions.

En relation avec la figure 2, on présente le procédé mis en oeuvre dans le terminal de transaction selon ce mode de réalisation particulier de l'invention.

Lorsqu'une transaction a lieu par l'intermédiaire du terminal de transaction, celui-ci crée, lors d'une étape de création 20, un message de transaction, dans lequel il insère des données concernant notamment le montant de la transaction, la date de la transaction, etc.

Selon ce mode de réalisation particulier de l'invention, lors d'une étape d'insertion 21, le terminal insère également une ou des illustrations/photographies représentatives du commerçant, stockées en mémoire lors d'une étape 200, par exemple lors de la mise en service du terminal et éventuellement mises à jour par le commerçant ultérieurement, et/ou une ou des illustrations/photographies représentatives de la transaction, c'est à dire du/des biens ou services objets de la transaction, obtenues lors d'une étape 201 par l'intermédiaire d'un appareil de prise de vues connecté au terminal de transaction.

Ainsi, lors de la transaction, l'appareil de prises de vues peut photographier les biens achetés et transmettre les photographies au terminal de transaction pour stockage en mémoire.

Selon une variante de ce mode de réalisation, le terminal peut lui-même prendre les photographies, sans faire appel à un appareil de prise de vues externe.

Selon encore une variante de ce mode de réalisation, non décrite dans la figure 2, les photographies et/ou illustrations peuvent être transmises de manière différée par rapport au message de transaction.

Le procédé selon l'invention comprend également une étape 22 de transmission pendant laquelle le terminal de transaction transmet le message de transaction ainsi complété à l'organisme bancaire correspondant, et plus particulièrement au serveur de relevés bancaires de l'organisme bancaire.

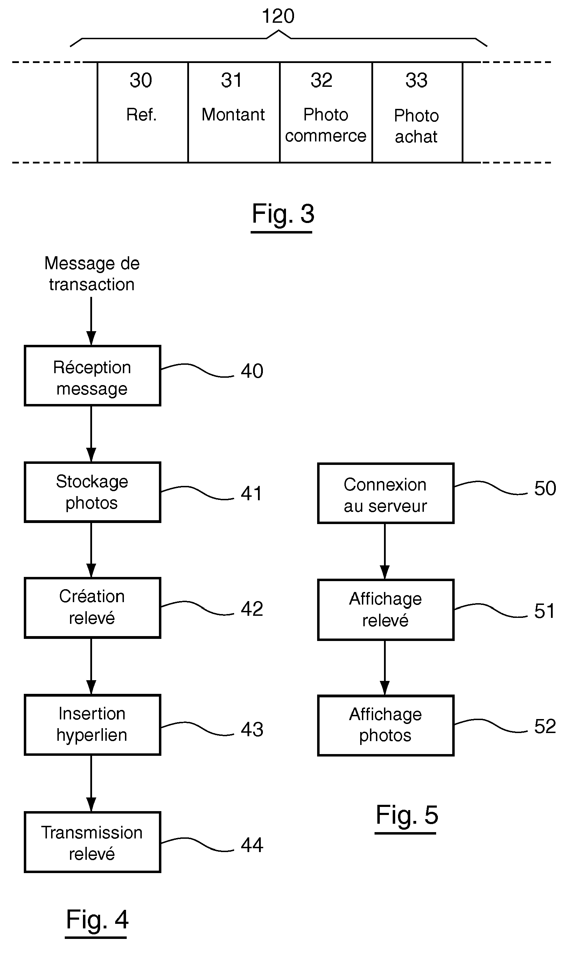

Un exemple de structure du signal ainsi transmis du terminal de transaction vers l'organisme bancaire est représenté en figure 3.

Le message de transaction 120 peut être composé de différents champs, prédéterminés et pouvant être spécifiques au terminal et/ou à l'organisme bancaire gérant les transactions, et comportant notamment les informations suivantes :
- une référence de transaction 30, pouvant être un numéro d'identification, un libellé précisant l'objet de la transaction (bien ou service), un identifiant du commerçant ou du commerce etc. (par exemple « Société ABC ») ;
- un montant de la transaction 31, selon un format prédéterminé pouvant par exemple présenter des conversions en différentes monnaies (Euros et Francs par exemple) ;
- une photographie/illustration 32 représentative du commerçant (par exemple une photographie de la devanture du magasin ou de l'enseigne extérieure) ;
- une photographie/illustration 33 représentative du bien et/ou du service objet de la transaction (par exemple une photographie du bouquet de fleurs acheté chez un fleuriste ou une photographie de la chambre d'hôtel réservée chez un hôtelier).

Ainsi, l'organisme bancaire peut avoir à sa disposition les informations nécessaires à la création de relevés informatiques correspondant aux transactions effectuées par le client.

La figure 4 illustre le procédé mis en oeuvre dans le serveur de relevés bancaires de l'organisme bancaire selon ce mode de réalisation particulier de l'invention.

Le serveur de relevés bancaires reçoit lors d'une étape 40 de réception un message de transaction provenant d'un terminal de transaction et le traite en vue de la création de relevés bancaires à destination du client.

Le serveur stocke lors d'une étape 41 dans un serveur de données les photographies/illustrations représentatives du commerçant et/ou de la transaction, de façon à pouvoir y accéder ultérieurement quand l'utilisateur en fera la requête.

Le serveur crée ensuite, lors d'une étape de création 42, un relevé informatique en prenant en compte les dernières transactions effectuées par le client, en associant à chaque ligne une transaction, puis en insérant, lors d'une étape 43 d'insertion, sur chaque ligne du relevé un/des hyperliens pointant sur les photographies/illustrations représentatives du commerçant et/ou de la transaction précédemment stockées sur un serveur de données.

Suite à une requête du client via un terminal client, le serveur transmet ensuite, lors d'une étape 44 de transmission, le relevé informatique vers le terminal du client.

Selon une variante de ce mode de réalisation, le serveur peut également transmettre le relevé informatique vers le terminal client selon un mode automatique et régulier, sans requête du client (par exemple, envoi systématique du relevé tous les 15 jours par courrier électronique). C'est également cette approche qui sera généralement retenue dans le cas d'un relevé sous forme papier.

La figure 5 présente l'accès aux relevés bancaires d'un client via un terminal client, selon ce mode de réalisation particulier de l'invention.

Le client se connecte d'abord au serveur de relevés bancaires, lors d'une étape 50 de connexion, par l'intermédiaire d'un accès à l'organisme bancaire gérant ses transactions.

Il accède lors d'une étape 51 à une page affichant sur l'écran de son terminal son relevé bancaire, listant les dernières transactions qu'il a effectuées.

Le client peut ensuite accéder aux informations détaillées concernant les commerçants ou les objets des différentes transactions en cliquant sur les hyperliens présents sur chaque ligne du relevé. Les photographies/illustrations des commerçants, des biens ou services objets des transactions s'affichent ainsi, lors d'une étape 52, sur l'écran de son terminal client.

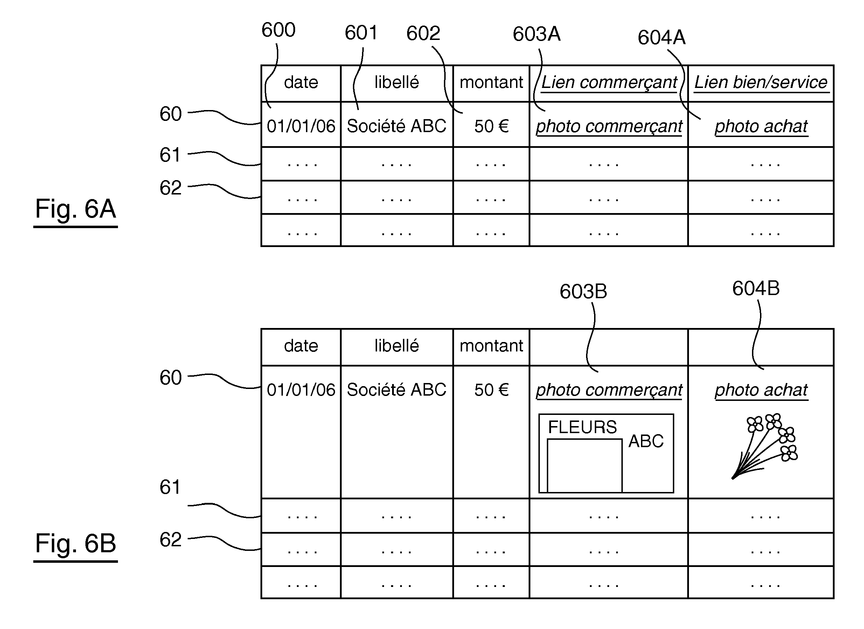

Un tel relevé informatique est présenté sur les figures 6A et 6B, selon ce mode de réalisation particulier de l'invention, respectivement avant et après affichage des photographies/illustrations des commerçants, des biens ou services objets des transactions suite au clic du client sur le ou les hyperliens disponibles sur chaque ligne du relevé.

La figure 6A présente un exemple de relevé bancaire tel que le client le voit s'afficher sur l'écran de son terminal client, selon ce mode de réalisation particulier de l'invention.

Les lignes 60, 61, 62 ... correspondent chacune à une transaction effectuée par le client.

Sur chaque ligne apparaissent les informations transmises par le terminal de transaction et traitées par le serveur de relevés bancaires de l'organisme bancaire et qui peuvent être :
- la date de la transaction 600 ;
- une référence de la transaction 601, pouvant être un numéro d'identification, un libellé précisant l'objet de la transaction (bien ou service), un identifiant du commerçant ou du commerce etc. ;
- un montant de la transaction 602, selon un format prédéterminé pouvant par exemple présenter des conversions en différentes monnaies (Euros et Francs par exemple) ;
- un hyperlien 603A pointant vers une illustration représentative du commerçant, par exemple une vue de la vitrine, du commerçant lui-même, un logo, un site Internet, ... ;
- un hyperlien 604A pointant vers une photographie représentative du bien objet de la transaction (cela peut également être un hyperlien pointant vers une illustration représentative d'un service objet de la transaction, par exemple une photographie d'un hôtel ou de la chambre elle-même dans le cas d'une réservation d'une chambre d'hôtel).

Le relevé peut, si besoin, présenter d'autres informations. D'autres formats et présentations des données sont bien sûr possibles.

Quand le client veut avoir plus d'informations concernant la transaction sur la ligne 60, il peut donc cliquer sur les hyperliens (603A, 604A) à sa disposition en fin de lignes et faire afficher, simultanément ou pas, les illustrations/photographies correspondantes.

Il obtient ainsi un relevé bancaire tel que présenté en figure 6B, sur lequel il peut visualiser l'illustration 603B représentative du commerçant (ici un fleuriste) et la photographie représentative du bien objet de la transaction 604B (ici un bouquet de fleurs).

Selon une variante de ce mode de réalisation particulier non illustrée ici, le serveur bancaire peut également permettre au client d'afficher dans une fenêtre indépendante, en pleine page ou selon un format de son choix les illustrations et photographies.

Selon encore une variante, le relevé tel que décrit en figure 6B peut être délivré directement au client, sans avoir à cliquer sur des liens. Il peut également être imprimé sous cette forme par l'organisme bancaire, puis envoyé par voie postale au client.

L'invention permet ainsi de fournir un service nouveau, ergonomique et efficace pour le client. Ce service peut être gratuit ou payant. Dans ce dernier cas, la facturation peut être forfaitaire, ou fonction de l'utilisation du service (par exemple proportionnelle au nombre de consultation, par activation d'un hyperlien, et/ou de photographies transmises par l'utilisateur).

## Revendications

1. Procédé de fourniture de données représentatives de transactions entre un client et au moins un commerçant, par l'intermédiaire d'un organisme bancaire (11),
ledit organisme bancaire délivrant audit client un relevé (101) comprenant, pour chaque transaction, une ligne de relevé, comprenant au moins une référence de ladite transaction et/ou dudit commerçant et un montant correspondant,
**caractérisé en ce qu'**il comprend :
- une phase de transaction comprenant les étapes suivantes :
- une étape d'enregistrement des données représentatives de ladite transaction, dans un serveur de relevés (11) ;
- une étape d'obtention et de stockage dans un serveur de données d'illustrations (111) d'au moins une information représentative d'une photographie et/ou illustration représentative dudit commerçant, dite information illustrative ;
- une phase de fourniture dudit relevé comprenant les étapes suivantes :
- une étape de construction dudit relevé, associant à au moins une desdites lignes de relevé d'une part lesdites données représentatives de la transaction, et d'autre part au moins une desdites informations illustratives et/ou d'au moins une information désignant via un hyperlien au moins une desdites informations illustratives, dite information d'accès ;
- une étape de transmission dudit relevé.

2. Procédé selon la revendication 1, **caractérisé en ce que** ledit relevé est un relevé informatique (101) visualisable sur un terminal client (10).

3. Procédé selon l'une quelconque des revendications 1 et 2, **caractérisé en ce que** ladite phase de transaction comprend les étapes suivantes :
- obtention d'au moins une photographie et/ou illustration représentative dudit commerçant ;
- création d'un message de transaction (120), comprenant des données représentatives d'une transaction et des données correspondant à ladite photographie et/ou illustration ;
- transmission dudit message de transaction audit organisme bancaire.

4. Procédé selon la revendication 3, **caractérisé en ce qu'**au moins une desdites photographies et/ou illustrations est stockée dans ledit terminal de transaction (12) dudit commerçant, et incluse dans ledit message de transaction (120).

5. Procédé selon l'une quelconque des revendications 1 à 4, **caractérisé en ce qu'**au moins une desdites photographies et/ou illustrations est transmise par ledit terminal de transaction audit organisme bancaire lors d'une étape d'initialisation et stockée dans ledit serveur de données.

6. Procédé selon l'une quelconque des revendications 1 à 5, **caractérisé en ce que** ladite information illustrative comprend un hyperlien dirigeant vers un site Internet dudit commerçant.

7. Procédé selon l'une quelconque des revendications 1 à 6, **caractérisé en ce qu'**il comprend une étape d'obtention d'au moins une photographie à l'aide d'un appareil de prise de vues (13), connecté à ou intégré dans un terminal de transaction.

8. Procédé selon l'une quelconque des revendications 1 à 7, **caractérisé en ce qu'**au moins certaines desdites informations illustratives sont stockées dans un terminal de transaction dudit commerçant et transmises par ledit terminal de transaction audit organisme bancaire en différé par rapport à un message de transaction correspondant, ledit message de transaction comprenant au moins une référence à la ou auxdites informations illustratives.

9. Terminal de transaction permettant de réaliser une transaction entre un client et un commerçant, et communiquant avec un organisme bancaire,
**caractérisé en ce qu'**il comprend :
- des moyens d'obtention d'au moins une information représentative d'une photographie et/ou d'illustration représentative dudit commerçant, dite information illustrative ;
- des moyens d'insertion de la ou desdites informations illustratives et/ou d'au moins une référence à la ou auxdites informations illustratives dans un message de transaction ;
- des moyens de transmission dudit message de transaction audit organisme bancaire.

10. Terminal de transaction selon la revendication 9, **caractérisé en ce qu'**il comprend des moyens de prise de vues et/ou de mise en oeuvre d'une connexion avec un appareil de prise de vues délivrant au moins une photographie d'au moins un bien ou service objet de ladite transaction.

11. Terminal de transaction selon l'une quelconque des revendications 9 et 10, **caractérisé en ce qu'**il comprend des moyens de transmission audit organisme bancaire d'au moins une photographie et/ou illustration représentative dudit commerçant en différé par rapport audit message de transaction.

12. Procédé de transaction mis en oeuvre dans un terminal de transaction, ledit terminal permettant de réaliser une transaction entre un client et un commerçant, et communiquant avec un organisme bancaire,
**caractérisé en ce qu'**il comprend les étapes suivantes :
- obtention d'au moins une information représentative d'une photographie et/ou d'illustration représentative dudit commerçant, dite information illustrative ;
- insertion de la ou desdites informations illustratives et/ou d'au moins une référence à la ou auxdites informations illustratives dans un message de transaction ;
- transmission dudit message de transaction audit organisme bancaire.

13. Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour l'exécution du procédé de transaction selon la revendication 12, lorsqu'il est exécuté sur un ordinateur.

14. Signal de données émis par un terminal de transaction entre un client et un commerçant, à destination d'un organisme bancaire,
**caractérisé en ce qu'**il comprend au moins un champ de données comprenant au moins une information représentative d'au moins une photographie et/ou au moins une illustration dudit commerçant.

15. Signal de données selon la revendication 14, **caractérisé en ce que** lesdites informations appartiennent au groupe comprenant au moins :
- au moins une photographie et/ou illustration représentative dudit commerçant ;
- au moins un hyperlien pointant vers une base de données contenant des photographies et/ou des illustrations dudit commerçant;
- au moins un hyperlien pointant vers un site Internet dudit commerçant.

16. Serveur de relevés bancaires représentatifs d'au moins une transaction entre un client et au moins un commerçant, lesdits relevés comprenant, pour chaque transaction, une ligne de relevé, comprenant au moins une référence de ladite transaction et/ou dudit commerçant et un montant correspondant,
**caractérisé en ce qu'**il comprend :
- des moyens d'enregistrement des données représentatives de ladite transaction ;
- des moyens de construction dudit relevé, associant à au moins une desdites lignes de relevé d'une part lesdites données représentatives de la transaction, et d'autre part au moins un des éléments appartenant au groupe comprenant :
o au moins une photographie et/ou illustration dudit commerçant ;
o au moins un hyperlien pointant sur au moins une photographie et/ou illustration dudit commerçant ;
o au moins un hyperlien pointant sur un site Internet dudit commerçant.
- des moyens de transmission dudit relevé.

17. Serveur de relevés bancaires selon la revendication 16, **caractérisé en ce qu'**il comprend des moyens d'association d'une transaction à au moins une photographie dudit commerçant et/ou d'au moins un bien ou service objet de ladite transaction transmise en différé par un terminal mobile, en fonction d'au moins un paramètre appartenant au groupe comprenant :
- des paramètres d'horodatage de ladite transaction et de ladite photographie dudit commerçant ;
- des paramètres de localisation de ladite transaction et de la station de base utilisée par ledit terminal mobile pour ladite transmission de ladite photographie dudit commerçant ;
- des paramètres d'identification de ladite transaction et dudit terminal mobile.

18. Procédé d'enrichissement de relevés bancaires mis en oeuvre dans un serveur, lesdits relevés bancaires étant représentatifs d'au moins une transaction entre un client et au moins un commerçant et comprenant, pour chaque transaction, une ligne de relevé, comprenant au moins une référence de ladite transaction et/ou dudit commerçant et un montant correspondant,
**caractérisé en ce qu'**il comprend :
- une étape d'enregistrement des données représentatives de ladite transaction;
- une étape de construction dudit relevé, associant à au moins une desdites lignes de relevé d'une part lesdites données représentatives de la transaction, et d'autre part au moins un des éléments appartenant au groupe comprenant :
o au moins une photographie et/ou illustration dudit commerçant ;
o au moins un hyperlien pointant sur au moins une photographie et/ou illustration dudit commerçant ;
o au moins un hyperlien pointant sur un site Internet dudit commerçant ;
- une étape de transmission dudit relevé.

19. Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour l'exécution du procédé d'enrichissement de relevés bancaires selon la revendication 20, lorsqu'il est exécuté sur un ordinateur.

20. Signal représentatif d'un relevé émis par un serveur de relevés bancaires, comprenant au moins les champs suivants, pour chaque ligne de relevé :
- un champ de référence de transaction ;
- un champ de montant de transaction,
**caractérisé en ce qu'**il comprend un champ d'enrichissement comprenant au moins un des éléments appartenant au groupe comprenant :
- au moins une photographie et/ou illustration dudit commerçant ;
- au moins un hyperlien pointant sur au moins une photographie et/ou illustration dudit commerçant ;
- au moins un hyperlien pointant sur un site Internet dudit commerçant.
